# EUROPÄISCHE PATENTSCHRIFT

(11) **EP 2 289 743 B1**
(45) Veröffentlichungstag und Bekanntmachung des Hinweises auf die Patenterteilung: **15.05.2013**
(21) Anmeldenummer: 10174305.2
(22) Anmeldetag: 27.08.2010
(51) Int. Cl.: B60S 9/08

(54) **Hubstütze**
Hydraulic leveller
Appui de levage

(30) Priorität: 27.08.2009 DE 202009005194 U
(43) Veröffentlichungstag der Anmeldung: 02.03.2011
(73) Patentinhaber: AL-KO Kober AG, 89359 Kötz (DE)
(72) Erfinder: Sailer, Wolfgang, 6290 Mayrhofen (AT)
(74) Vertreter: Ernicke, Hans-Dieter

(56) Entgegenhaltungen:
- EP-A1- 0 597 406
- WO-A1-2009/067091
- US-A- 3 362 683
- US-A- 3 817 493
- US-A- 3 984 082
- US-A- 4 635 904
- US-A- 4 662 610

## Beschreibung

Die Erfindung betrifft eine Hubstütze mit den Merkmalen im Oberbegriff des Hauptanspruchs.

Eine solche Hubstütze ist aus der Praxis bekannt. Sie besteht aus einem Träger mit einem schwenkbar daran gelagerten Stützfuß und einer Hubeinrichtung für die Längenverstellung und die Lageveränderung des Stützfußes. Mit einem manuellen oder motorischen Antrieb wird der Stützfuß in der Länge verstellt und zugleich gedreht, wobei seine Schwenklage von der Längenverstellung abgeleitet wird. Die Längenverstellung und die Schwenkbewegung des Stützfußes sind über eine Kulissenführung gekoppelt, wobei die Drehstellung des Stützfußes von dessen Ausfahrlänge abhängt. Die Endlage des Stützfußes in der abgeschwenkten Arbeitsstellung ist nicht eindeutig bestimmt. Außerdem ist eine gewisse Ausfahrlänge vorgegeben, die in der abgeschwenkten Arbeitsstellung den restlichen Ausfahrweg begrenzt und zu Problemen bei einem lokal geringen Abstand zum Untergrund verursachen kann. Bei lokalen Bodenerhöhungen kann unter Umständen der Stützfuß nicht bis in eine vertikale Arbeitsstellung geschwenkt werden.

WO-A2009/067091 offenbart den Oberbegriff des Anspruchs 1.

Es ist Aufgabe der vorliegenden Erfindung, eine verbesserte Hubstütze aufzuzeigen.

Die Erfindung löst diese Aufgabe mit den Merkmalen im Hauptanspruch.
Die beanspruchte Positioniereinrichtung ermöglicht es, zumindest eine Endlage des Stützfußes zu bestimmen und einzustellen. Vorzugsweise können beide Endlagen in der Ruhestellung und der Arbeitsstellung bestimmt werden. Hierfür kann die Positioniereinrichtung eine Endlagensicherung und/oder eine Lageneinstellung aufweisen.

Diese können kombiniert sein und gemeinsam genutzte Bauteile aufweisen, was den Bauaufwand verringert. Außerdem kann eine schützende Abdichtung des Stützfußes und der darin angeordneten Komponenten erreicht werden. Dies ist besonders für die Ruhestellung von Vorteil und verhindert im Fahrbetrieb das Endringen von Spritzwasser, Staub oder dgl..

Außerdem kann die Längenverstellung, insbesondere der Ausfahrweg, von der Lagenänderung, insbesondere vom Schwenkweg entkoppelt werden. In der Endlage in Arbeitsstellung steht daher mehr Ausfahrweg zur Verfügung als beim Stand der Technik. Insbesondere kann der vorzugsweise frei drehbar gelagerte Stützfuß beim Abschwenken aus der Ruhestellung schnell und ohne wesentliche Ausfahrbewegung abklappen und sich in eine definierte Arbeitsstellung bewegen.

Die Betriebssicherheit und die Funktionalität der Hubstütze werden verbessert. Außerdem werden die zur Hubstützenbetätigung und zum manuellen oder motorischen Antrieb erforderlichen Kräfte und Wege optimiert.

Die Endlagensicherung kann in der Ruhestellung den zurückbewegten und z.B. hochgeschwenkten Stützfuß blockieren und sicher halten, so dass er sich während der Fahrt des Fahrzeugs nicht unbeabsichtigt lösen und in die Arbeitsstellung bewegen kann. Die aktive und steuerbare Endlagensicherung bietet eine höhere Betriebssicherheit als eine bloße Selbsthemmung der Hubeinrichtung. Die Lageneinstellung kann die Arbeitsstellung des Stützfußes in der z.B. abgeschwenkten Lage bestimmen. Auf eine starre Fixierung in der Arbeitsstellung kann dabei verzichtet werden.

Eine nachgiebige oder ausweichfähige Ausbildung der Endlagensicherung und/oder der Lageneinstellung hat verschiedene Vorteile. Einerseits kann die Endlagensicherung in der Ruhestellung von selbst einfallen und z.B. in der Art einer Federraste den Stützfuß fixieren. In der Arbeitsstellung erlaubt die Nachgiebigkeit der Lageneinstellung ein evtl. Ausweichen des Stützfußes in Sondersituationen, insbesondere bei einer Fahrbewegung des Fahrzeugs bei vergessener Hubstützenbetätigung und ausgefahrener Hubstütze.

Die Hubeinrichtung kann mit der Positioniereinrichtung vorteilhaft zusammenwirken und hierfür entsprechend ausgebildet sein, wobei die beanspruchte Ausbildung des Hubantriebs eigenständige erfinderische Bedeutung hat. Die Hubeinrichtung und insbesondere deren Hubantrieb kann sowohl die Längenverstellung als auch die Lageveränderung des Stützfußes, insbesondere in Form einer Schwenkbewegung, bewirken und hierbei mit einem einzigen Antrieb auskommen, der wahlweise manuell oder motorisch mit einer Kurbel oder einem Elektromotor oder einem anderen geeigneten Antriebsmittel ausgebildet sein kann. Die Längenverstellung kann stufenlos sein. Sie kann bei der Betätigung der Hubstütze erfolgen.

Insbesondere können die Längenverstellung und die Lageveränderung zumindest bereichsweise voneinander getrennt erfolgen. Die vorgesehenen Endlagen des Stützfußes können dadurch unabhängig vom Untergrund und der Fahrzeugstellung eingenommen werden. Insbesondere kann der Stützfuß in der gehaltenen Arbeitsstellung ausgefahren werden. Umgekehrt kann die Lageneinstellung dafür sorgen, dass zunächst der Stützfuß eingefahren und anschließend in seiner Lage verändert, insbesondere hochgeschwenkt wird, wobei in der Ruhestellung die Endlagensicherung selbsttätig einfallen und die Antriebsenergie hierfür von der Hubeinrichtung erhalten kann. Andererseits kann die Endlagensicherung in der Ruhestellung durch anfängliches Ausfahren des Stützfußes gelöst werden, wobei der Stützfuß erst anschließend in seiner Lage verändert, insbesondere abgeschwenkt wird. Er kann hierbei z.B. einfach, schnell und im wesentlichen ungehindert abklappen.

Die Positioniereinrichtung bzw. die Endlagensicherung und/oder die Lageneinstellung kann durch eine Anschlag- oder Blockerfunktion ein selbsttätiges und definiertes Umschalten der Kinematik der Hubeinrichtung von der Lagenänderung zur Längenverstellung und umgekehrt bewirken.

Die Hubeinrichtung kann eine geeignete Stelleinrichtung aufweisen, die für eine zumindest bereichsweise getrennte Längenverstellung und Lagenänderung des Stützfußes sorgen kann. Hierbei kann die Stelleinrichtung, die vorzugsweise mit einem Getriebe ausgerüstet ist, Stützkräfte in der Arbeitsstellung aufnehmen und hierfür z.B. selbsthemmend ausgebildet sein. Eine Unterbringung der Stelleinrichtung im hohlen Stützfuß bietet Schutz gegen Beschädigung und negative Umwelteinflüsse.

Die Hubstütze eignet für beliebige Fahrzeuge und kann am Fahrzeug an beliebigen Stellen und in beliebiger Zahl angebracht werden. Sie eignet sich insbesondere zur Stabilisierung eines geparkten Fahrzeugs, wobei das Fahrzeugchassis zumindest bereichsweise aus der Federung von mindestens einer Achse gehoben wird. Die Hubstütze bietet besondere Vorteile für Niederflurfahrzeuge mit geringer Bodenfreiheit.

Die Hubstütze ist für motorisierte und nicht motorisierte Fahrzeuge, insbesondere auch Anhänger geeignet. Bevorzugte Einsatzbereiche sind bei Wohnwagen, Wohnmobilen, Verkaufsfahrzeugen oder dgl. gegeben. In Parkstellung können sich Personen im Fahrzeug wie auf einem annähernd festen Boden bewegen. Das beanspruchte Fahrzeug kann eine oder mehrere Hubstützen, insbesondere mindestens ein im Heckbereich befindliches Hubstützenpaar, aufweisen.

Ferner bietet eine motorisierte Hubstütze die Möglichkeit einer optimierten Betätigung und Steuerung mittels einer Fernbedienung und kann mit einer Niveauregulierung kombiniert werden. Durch eine Sicherheitseinrichtung können Fehlbedienungen und Fehlfunktionen vermieden werden.

In den Unteransprüchen sind vorteilhafte Ausgestaltungen der Erfindung angegeben.

Die Erfindung ist in den Zeichnungen beispielhaft und schematisch dargestellt. Im Einzelnen zeigen:
- Figur 1:: ein Fahrzeug mit einer Hubstütze,
- Figur 2:: eine perspektivische durchscheinende Ansicht einer Hubstütze in Arbeitsstellung,
- Figur 3:: einen Längsschnitt durch eine Hubstütze in Ruhestellung,
- Figur 4:: eine aufgebrochene Ansicht der Hubstütze von Figur 3 in Arbeitsstellung,
- Figur 5:: eine Seitenansicht der Hubstütze in Arbeitsstellung und verschiedenen Einstelllängen,
- Figur 6:: eine Draufsicht auf die Hubstütze gemäß Pfeil VI von Figur 4,
- Figur 7:: eine aufgebrochene Seitenansicht einer Variante der Hubstütze in Ruhestellung mit verschiedenen Einstelllängen,
- Figur 8:: eine Seitenansicht einer motorisierten Hubstütze in zwei Endlagen,
- Figur 9:: eine Stirnansicht der Hubstütze gemäß Pfeil IX von Figur 8 und
- Figur 10:: eine Draufsicht auf die Hubstütze gemäß Pfeil X von Figur 8.

Die Erfindung betrifft eine Hubstütze (2) für Fahrzeuge (1). Die Erfindung betrifft außerdem die einzelnen Komponenten der Hubstütze (2) als eigenständige Erfindungsaspekte und ferner das mit ein oder mehreren Hubstützen (2) ausgerüstete Fahrzeug (1).

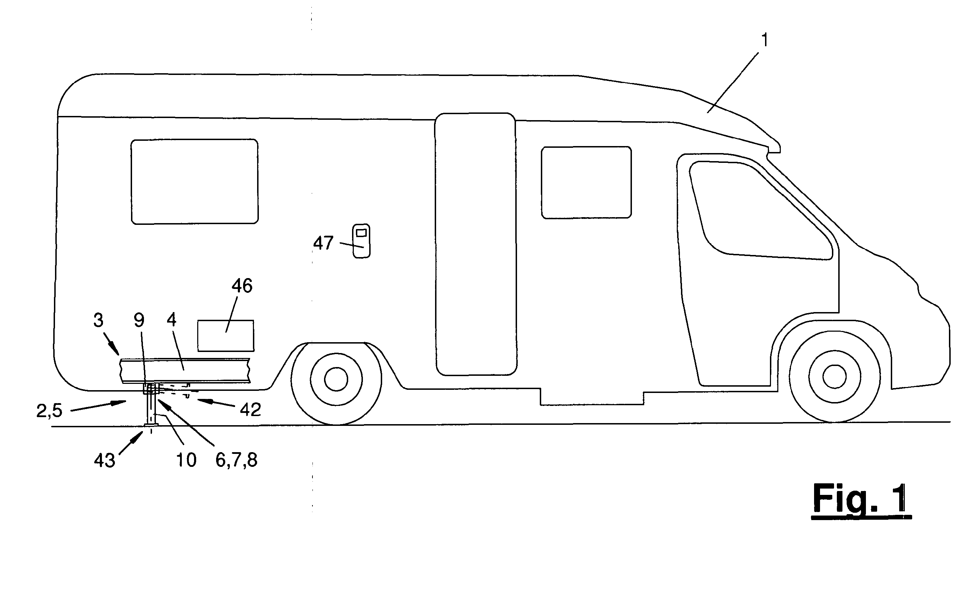

Figur 1 zeigt schematisch ein Fahrzeug (1) mit einer Hubstütze (2) im Heckbereich hinter der Hinterachse des Fahrzeugs (1). Das Fahrzeug (1) kann motorisiert sein und z.B. ein Wohnmobil, ein Verkaufsfahrzeug oder dgl. sein. Alternativ kann das Fahrzeug (1) unmotorisiert sein und z.B. als Anhänger ausgebildet sein. Dies kann z.B. ein Wohnanhänger, Verkaufsanhänger oder dgl. sein.

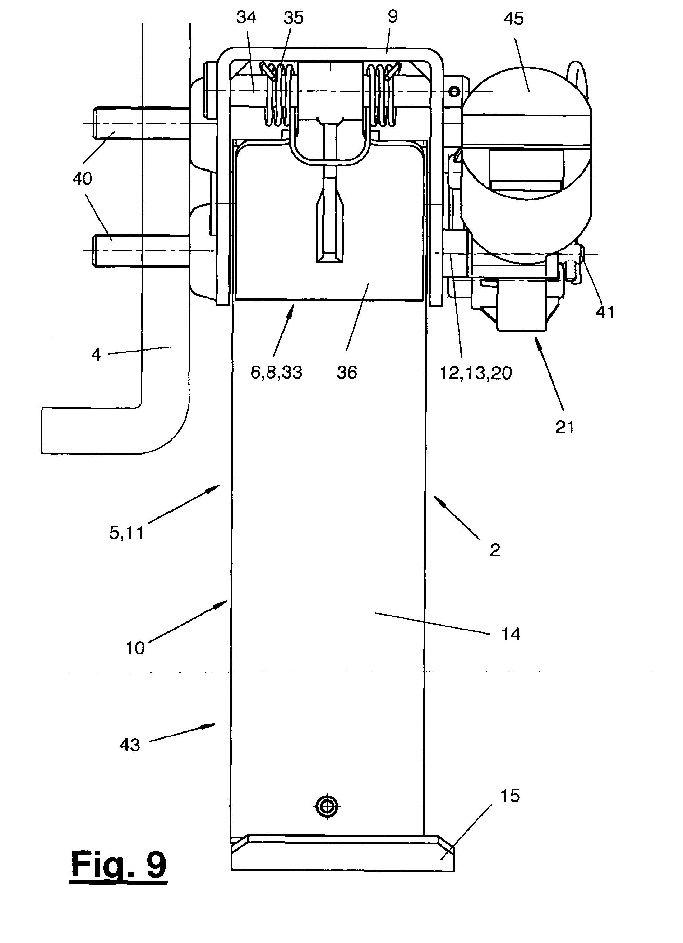

Das Fahrzeug (1) besitzt ein Fahrgestell (3) mit einer oder mit mehreren Achsen. Das Fahrgestell (3) kann rahmenartig ausgebildet sein und einen oder mehrere Längsträger (4) aufweisen. Das Fahrgestell (3) kann für eine Niederflurfahrzeug tief gelegt sein und eine geringe Bodenfreiheit besitzen. Am Fahrzeug (1) sind eine oder mehrere Hubstützen (2) an geeigneter Stelle angeordnet und z.B. am aufrechten Mittelsteg eines abgekanteten und im Querschnitt L-, S- oder Z-förmigen Längsträgers (4) befestigt. Figur 9 verdeutlicht schematisch eine solche Fixierung.

Die Hubstütze (2) dient zur Stabilisierung eines abgestellten Fahrzeugs (1) in der Parkstellung, wobei das Chassis (3) und der Aufbau zumindest bereichsweise aus der Federung gehoben und am Untergrund abgestützt werden. Hierbei können die Fahrzeugräder am Boden bleiben oder bei Überschreiten des Federwegs abgehoben werden. Beispielsweise finden sich im Heckbereich des Fahrzeugs (1) und hinter dessen Hinterachse zwei Hubstützen (2) beidseits der Fahrzeugmitte. Auch im Frontbereich des Fahrzeugs (1) können ein oder mehrere Hubstützen (2) angeordnet sein.

Die ein oder mehreren Hubstützen (2) können durch einen manuellen oder motorischen Antrieb (21) betätigt werden. Ein manueller Antrieb kann z.B. eine Kurbel oder ein anderes Handbedienungsorgan sein. Ein motorischer Antrieb kann ein oder mehreren Motoren aufweisen, wobei unter den Begriff eines motorischen Antriebs neben klassischen Elektromotoren beliebige andere motorische Antriebsmittel, z.B. auch pneumatische oder hydraulische Zylinder oder dgl. subsumiert werden.

Bei einem motorischen Antrieb (21) kann eine Energieversorgung (46) und eine Bedieneinrichtung (47) für jede einzelne Hubstütze (2) oder für mehrere Hubstützen (2) gemeinsam vorhanden sein. Die Bedieneinrichtung (47) kann eine bewegliche Fernbedienung mit ggf. beweglichem Handbedienteil, einer Anzeige und mehreren Bedienelementen haben. Außerdem kann eine Sicherungseinrichtung vorhanden sein, die z.B. mittels eines Sicherungsknopfes, einer Aktivierungsschaltung, einer Bedienortkontrolle oder dgl. Fehlbedienungen vermeidet und insbesondere eine Hubstützenbetätigung während der Fahrt verhindert.

Wie Figur 1 verdeutlicht, besteht die Hubstütze (2) aus einem am Fahrzeug (1) befestigten Träger (9) mit einem daran beweglich gelagerten Stützfuß (10), der einerseits in seiner Länge verstellbar ist und andererseits in seiner Lage verändert werden kann. Der Stützfuß (10) kann z.B. zwischen zwei Endlagen (42,43) hin und her bewegt werden. In der einen Endlage (43) der Arbeitsstellung oder Hubstellung ist der Stützfuß (10) nach unten und vorzugsweise im wesentlichen senkrecht ausgerichtet, wobei er in seiner Länge soweit ausgefahren ist, dass er sich am Boden oder einer Unterlage abstützt. In der anderen Endlage (42) der Ruhestellung ist der Stützfuß (10) vom Boden entfernt und z.B. hochgeschwenkt, wobei das Fahrzeug (1) ausreichende Bodenfreiheit für den Fahrbetrieb erhält. In der Ruhestellung (42) kann der Stützfuß (10) auch eingefahren sein und seine minimale Länge haben.

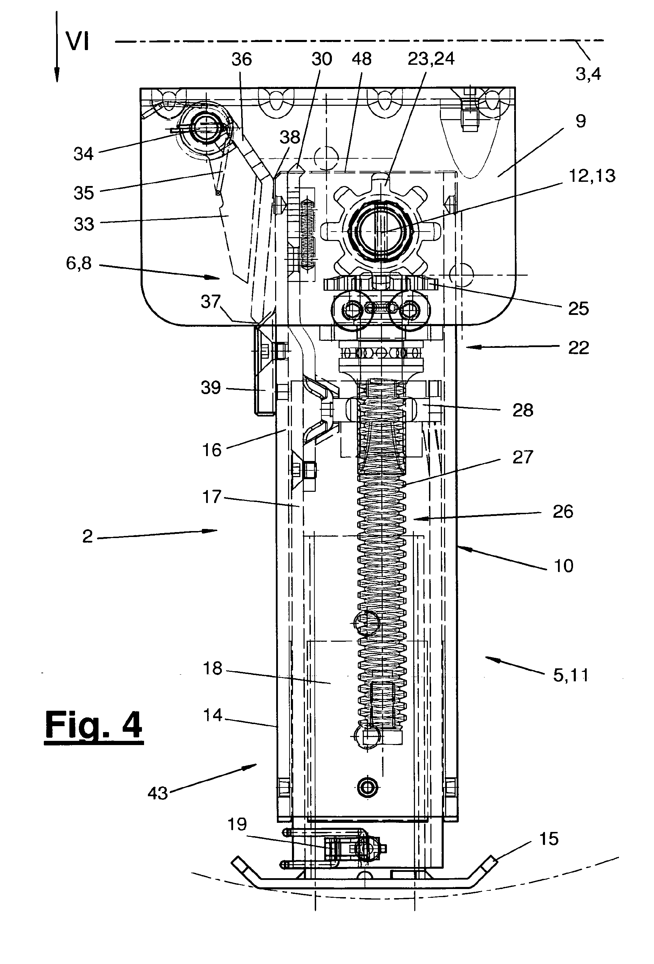

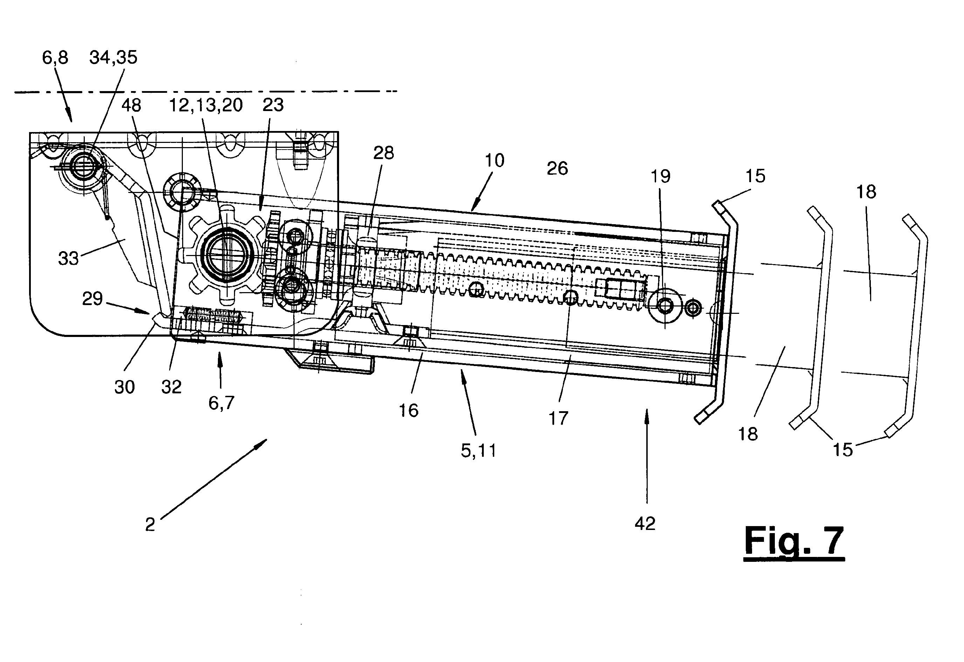

Der Träger (9) kann z.B. ein abgekantetes Blechteil in Form eine U-Bügels sein oder eine beliebige andere Ausbildung haben. Gemäß der Schemadarstellung von Figur 9 können seitlich am Träger (9) ein oder mehrere Befestigungsmittel (40), z.B. Schraubbolzen, zur Befestigung, insbesondere Verschraubung, am Längsträger (4) oder einem anderen Fahrzeugteil angeordnet sein. Hierbei können die Bolzen (40) am Fuß gewölbte Sockel für einen formschlüssigen, spannbaren Eingriff und eine Abstützung an napfförmigen Prägungen (nicht dargestellt) des Mittelstegs aufweisen. In Figur 4 und 7 ist die Bezugskante oder Oberkante des Längsträgers (4) angedeutet.

Die Hubstütze (2) weist eine Hubeinrichtung (5) für die Längenverstellung und die Lagenveränderung des Stützfußes (10). Mittels der Hubeinrichtung (5) kann der Stützfuß (10) zwischen den zwei Endlagen (42,43) der Ruhe- und Arbeitsstellung hin und her bewegt werden. Die Lagenveränderung kann z.B. eine Schwenkbewegung um eine horizontale Drehachse (12) sein. Alternativ sind beliebige andere Kinematiken mit einer oder mehreren rotatorischen und/oder translatorischen Bewegungsachsen möglich. Es können ggf. auch definierte Zwischenlagen eingenommen werden.

Die Hubstütze (2) kann ferner eine Positioniereinrichtung (6) für mindestens eine Endlage, vorzugsweise beide Endlagen (42,43) des Stützfußes (10) aufweisen. Die Positioniereinrichtung (6) kann eine oder mehrere Endlagen (42,43) definieren und den Stützfuß (10) in der Endlage (42,43) halten sowie ggf. auch fixieren. Hierfür weist die Positioniereinrichtung (6) z.B. eine Endlagensicherung (7) für die Endlage (42) in Ruhestellung und eine Lageneinstellung (8) für die Endlage (43) in Arbeitsstellung auf. Die Endlagensicherung (7) und die Lageneinstellung (8) können miteinander kombiniert sein und gemeinsame Bauteile, insbesondere einen federnden Anschlag (33) aufweisen.

Die Endlagensicherung (7) und/oder die Lageneinstellung (8) können nachgiebig oder ausweichfähig ausgebildet sein. Hierdurch kann z.B. die Endlagensicherung (7) bei der Einnahme der Ruhestellung (42) von selbst einfallen und dabei die Bewegungsenergie des Stützfußes (10) und der Hubeinrichtung (5), insbesondere bei der Lagenänderung bzw. Schwenkbewegung, nutzen. Eine nachgiebige Lageneinstellung (8) definiert die z.B. vertikale Arbeitsstellung (43) des Stützfußes (10) und ermöglicht andererseits aber auch ein Ausweichen durch Wegschwenken in die eine oder andere Richtung in Sondersituationen, z.B. bei einem Anfahren des Fahrzeugs (1) bei vergessener Hubstützenbetätigung.

Die vorerwähnte Sicherungseinrichtung kann für solche Fälle mit dem Fahrzeug (1) derart gekoppelt sein, dass der Fahrer beim Starten des Motors, Lösen der Parkbremse oder anderen derartigen Betriebssituationen ein Warnsignal über die in Arbeitsstellung (43) befindliche Hubstütze (2) übermittelt bekommt. Die Sicherungseinrichtung kann andererseits ggf. am Fahrzeug aktiv sichernd eingreifen und durch Blockierung der Zündung oder dgl. ein Wegfahren verhindern.

Die Hubeinrichtung (5) kann derart ausgebildet sein, dass die Längenverstellung und die Lagenveränderung des Stützfußes (10) zumindest bereichsweise voneinander getrennt oder entkoppelt sind. Sie können unabhängig voneinander erfolgen und nacheinander ablaufen. Insbesondere hängt die Ausfahrlänge des Stützfußes nicht direkt von der Drehlage ab und kann eigenständig nach Bedarf eingestellt werden. Andererseits ist zumindest ein Abschwenken aus der Ruhestellung ohne größere Längenänderung und in einer im wesentlichen freien Fall-oder Klappbewegung möglich.

Der Stützfuß (10) kann hierbei z.B. in der bevorzugt nachgiebig gehaltenen Arbeitsstellung (43) in der Länge verändert und insbesondere ausgefahren und/oder eingefahren werden. Andererseits kann in der Ruhestellung (42) der Stützfuß (10) zunächst ausgefahren werden, wobei die Endlagensicherung (7) gelöst wird und der Stützfuß (10) erst anschließend seine Lage ändert, wobei er z.B. nach unten schwenkt. Die Längenverstellung und die Lagenänderung können sich ggf. bereichsweise überlagern, was insbesondere bei der Bewegung aus der Ruhestellung (42) in die Arbeitsstellung (43) der Fall sein kann. Bei der entgegengesetzten Stützfußbewegung kann dies ebenfalls der Fall sein. Alternativ kann in der Arbeitsstellung (43) der Stützfuß (10) zunächst eingefahren und verkürzt werden, wobei erst am Ende dieser Längenverstellung die Lageveränderung und die Rückbewegung in die Ruhestellung (42) stattfindet.

Die Hubeinrichtung (5) kann mit der Positioniereinrichtung (6) zur Trennung von Längenverstellung und Lageveränderung des Stützfußes (10) zusammenwirken. Die Hubeinrichtung (5) bewirkt in der Ruhestellung (42) z.B. ein Aktivieren und Einfallen der Endlagensicherung (7) und auch deren erneutes Lösen. Die Lageeinstellung (8) kann durch eine Anschlagfunktion das Ende der Lageveränderung bzw. Schwenkbewegung des Stützfußes (10) bewirken und ein weiteres Ausfahren des Stützfußes (10) erlauben. Hierdurch kann die Arbeitsstellung (43) eingenommen werden, ohne dass der Stützfuß (10) schon Kontakt mit dem Boden hat. Dieser Kontakt wird erst bei der weiteren Ausfahrbewegung hergestellt.

Die nachfolgend beschriebene Hubeinrichtung (5) hat andererseits eigenständige erfinderische Bedeutung und kann ohne die gezeigte und beanspruchte Positioniereinrichtung (6) eingesetzt werden. Desgleichen kann die Positioniereinrichtung (6) mit anderen als den nachfolgend beschriebenen Hubeinrichtungen (5) Verwendung finden.

In der gezeigten Ausführungsform ist der Stützfuß (10) frei schwenkbar um eine Achse (12) am Träger (9) gelagert. Die Schwenkachse (12) kann sich am oberen Stützfußende und bevorzugt mittig befinden. Sie kann hierbei mit der Antriebsachse (13) der Hubeinrichtung (5) zusammenfallen. Der Stützfuß (10) weist eine längenveränderliche und ggf. mehrteilige Stützsäule (14) auf, an deren freiem Ende ein Fußteil (15), z.B. eine Fußplatte zur Verbreiterung der Aufstandsfläche angeordnet sein kann. Die Stützsäule (14) kann teleskopierbar sein. Für deren Ausbildung gibt es verschiedene konstruktive Möglichkeiten. Im gezeigten Ausführungsbeispiel besteht die Stützsäule (14) aus zwei oder mehr relativ zueinander beweglichen Säulenteilen (16,17,18), die aneinander längsbeweglich angeordnet und ggf. auch aneinander geführt sind. Die z.B. rohrartigen Säulenteile (16,17,18) können ineinander gesteckt und längsbeweglich geführt sein.

Ein äußeres Säulenteil (16) ist mittels eines geeigneten Schwenklagers um die Achse (12) frei schwenkbar am Träger (9) gelagert. Der z.B. als U-förmiger Bügel ausgebildete Träger (9) kann hierbei das Außenrohr (16) umgreifen und Lageraugen aufweisen. Mindestens ein inneres Säulenteil (17) ist am oder im äußeren Säulenteil (16) angeordnet und geführt und kann zur Längenverstellung des Stützfußes (10) ein- und ausgefahren werden. Im gezeigten Ausführungsbeispiel ist ein drittes Säulenteil (18) vorgesehen, das in das Innenrohr (17) eingesteckt und mittels einer Absteckung (19) fixiert ist. Das Endrohr (18) trägt am freien Ende das Fußteil (15).

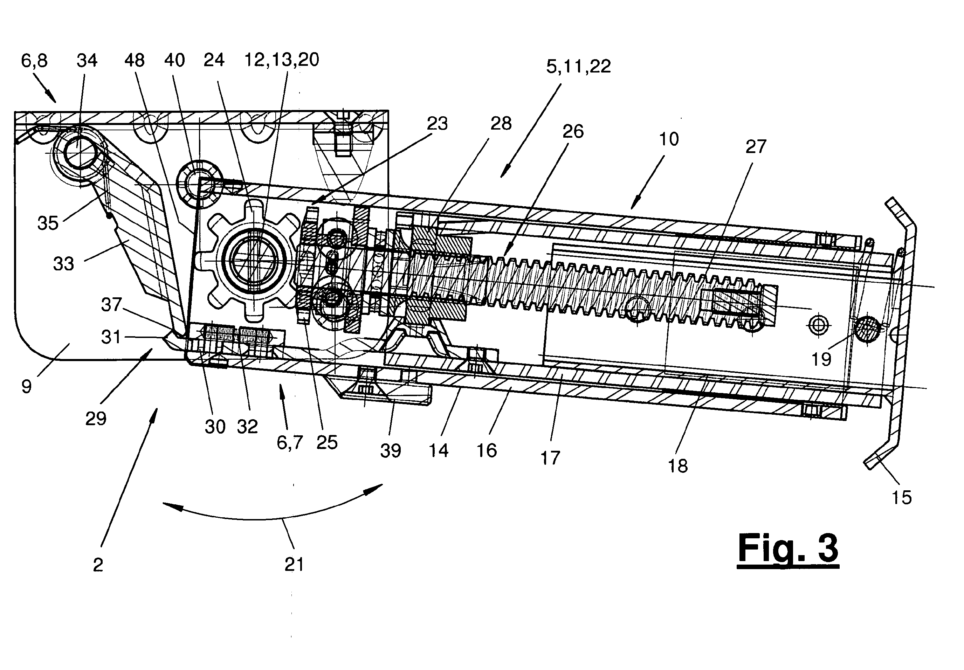

Die Eintauchtiefe im Innenrohr (17) kann mittels der quer durch die Säulenteile (17,18) sich erstreckenden Absteckung (19) und eines Bohrungsrasters in Stufen verändert und an unterschiedliche Fahrgestellhöhen angepasst werden. Die erforderliche Längenverstellung des Stützfußes (10) mittels der Hubeinrichtung (5) kann hierdurch klein gehalten werden. Die Absteckung (19) kann z.B. gemäß Figur 3 bis 5 als Federbügel oder gemäß der Variante von Figur 7 als Schraub- oder Clipsbolzen ausgeführt sein. Sie kann die Stützkräfte in Ausfahrstellung aufnehmen und einen Anschlag zur Begrenzung der Einfahrtiefe des Innenteils (17) im Außenteil (16) bilden. Alternativ ist eine stufenlose Verstellung mit einem axialen Längsschlitz und einer Klemmverbindung möglich. In weiterer Abwandlung kann auf das Endteil (18) verzichtet werden. Ferner ist es möglich, die Stützsäule (14) aus mehr als drei Säulenteilen aufzubauen.

In der gezeigten Ausführungsform sind die bevorzugt metallischen Säulenteile (16,17,18) als Rohre mit einer rechteckigen und vorzugsweise quadratischen Querschnittsform ausgebildet. Sie können alternativ eine kreisrunde, ovale, prismatische oder sonstige Querschnittsform haben.

In der gezeigten Ausführungsform wirkt die Hubeinrichtung (5) für die Längenverstellung auf das innere Säulenteil (17) und für die Lagenänderung auf das äußere Säulenteil (16) ein. In Abwandlung der gezeigten Ausführungsform kann die Hubeinrichtung (5) auch zusätzlich auf das Endteil (18) oder ggf. weitere Säulenteile wirken. Die Hubeinrichtung (5) steht hierbei vorzugsweise mit den Säulenteilen (16,17,18) in einer formschlüssigen Verbindung und nimmt die Stützkräfte auf.

Die Hubeinrichtung (5) weist eine Stelleinrichtung (11) zur Längenverstellung und zur Lagenveränderung des Stützfußes (10) auf, die im gezeigten Ausführungsbeispiel mit einem einzigen manuellen oder motorischen Antrieb (21) auskommt. Alternativ können mehrere solche Antriebe vorhanden sein. In den gezeigten Ausführungsbeispielen weist die Stelleinrichtung (11) ein Getriebe (22) mit einem nach außen geführten Treibteil (20) für die Verbindung mit einem manuellen oder motorischen Antrieb (21) auf. Das Treibteil (20) kann z.B. als Welle mit einem Vierkant am freien Ende ausgebildet sein, auf den eine Handkurbel oder eine motorische Antriebseinheit aufgesteckt werden können. Das Treibteil (20) erstreckt sich längs der vorzugsweise fluchtenden Achsen (12,13).

Das Getriebe (22) kann mehrteilig sein und weist z.B. ein Umlenkgetriebe (23) und einen Lineartrieb (26) auf, die ein Umlenken der horizontal eingeleiteten und vorzugsweise drehenden Antriebskräfte in eine lineare Längenverstellbewegung und eine Schwenkbewegung des Stützfußes (10) bewirken. Das Getriebe (22) kann selbsthemmend sein und kann die vom Stützfuß (10) eingeleiteten Stützkräfte aufnehmen.

Das Umlenkgetriebe (23) kann z.B. ein Kegelradgetriebe sein oder eine beliebige andere Ausbildung als Zahnradgetriebe, Lenkergetriebe oder dgl. haben. Es bewirkt z.B. eine Kraft- und Bewegungsumlenkung um 90°. Auf dem Treibteil (20) bzw. dessen konzentrischer Schwenk- und Antriebsachse (12,13) ist ein geeignetes Antriebselement (24), z.B. ein kegelförmiges Ritzel, montiert und wirkt mit einem Abtriebselement (25), z.B. einem Kegelzahnrad, zusammen, welches mit dem Lineartrieb (26) verbunden ist.

Der Lineartrieb (26) ist in der gezeigten Ausführungsform als Spindeltrieb ausgeführt und besitzt eine Gewindespindel (27) und eine damit kämmende Spindelmutter (28). Die drehende und in Axialrichtung ortsfest gehaltene Gewindespindel (27) bewirkt eine Längenverschiebung der Spindelmutter (28) und dadurch eine Längenverstellung des Stützfußes (10). Alternativ kann der Lineartrieb (26) in anderer Weise ausgebildet sein, z.B. als Zahnstangentrieb, als Zylinder mit Kolbenstange, als Schlittenanordnung mit einem linearen Antrieb oder in beliebiger anderer Weise. Der Lineartrieb (26) kann selbsthemmend sein.

Die Stelleinrichtung (11) ist im hohlen Innenraum das Stützfußes (10) angeordnet. Hierbei befindet sich das Umlenkgetriebe (23) im äußeren Säulenteil (16), wobei hier auch der Lineartrieb (26) abgestützt bzw. die Gewindespindel (27) drehbar und axial fest gelagert ist. Das Abtriebsteil des Lineartriebs (26), hier z.B. die Spindelmutter (28), ist mit dem inneren Säulenteil (17) verbunden. Bei einem mehrstufigen Lineartrieb (26) kann ggf. auch eine Verbindung von nachfolgenden Säulenteilen vorhanden sein. Die Gewindespindel (27) trägt am oberen Ende das Abtriebselement (25) des Umlenkgetriebes (23).

Die Endlagensicherung (7) ist in Abhängigkeit von der Längenverstellung des Stützfußes (10) betätigbar. Sie weist eine formschlüssige Verriegelung (29) zwischen dem Stützfuß (10) und dem Träger (9) zur Arretierung des Stützfußes (10) in der Ruhestellung (42) auf. Figur 3 und 7 verdeutlichen diese Anordnung. Der Eingriff erfolgt hierbei an einem Trägerteil oder wie in der gezeigten Ausführungsform an einem Teil der Lageneinstellung (8), hier z.B. einem Anschlag (33).

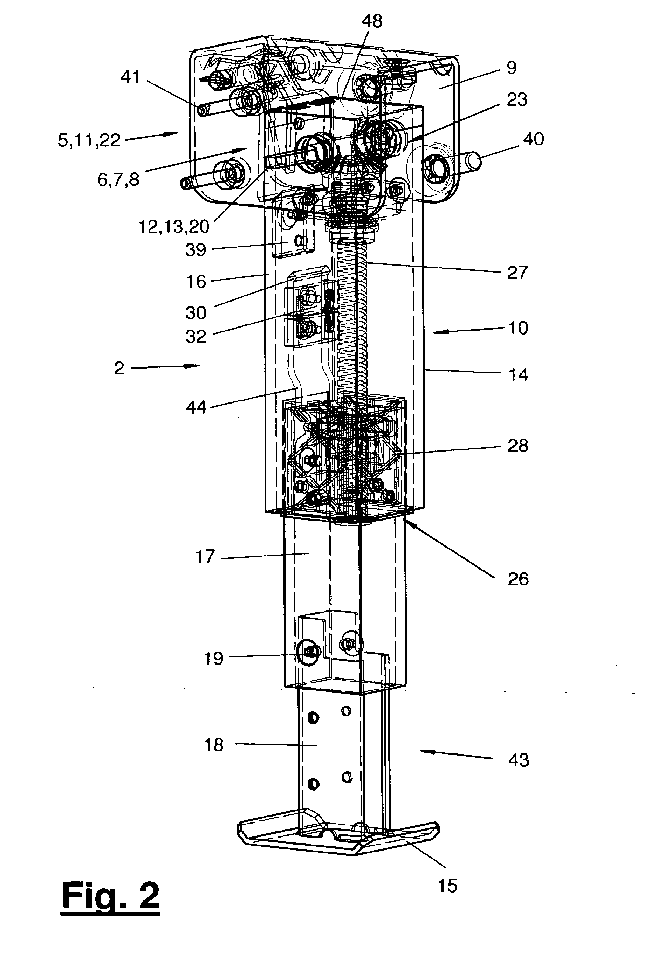

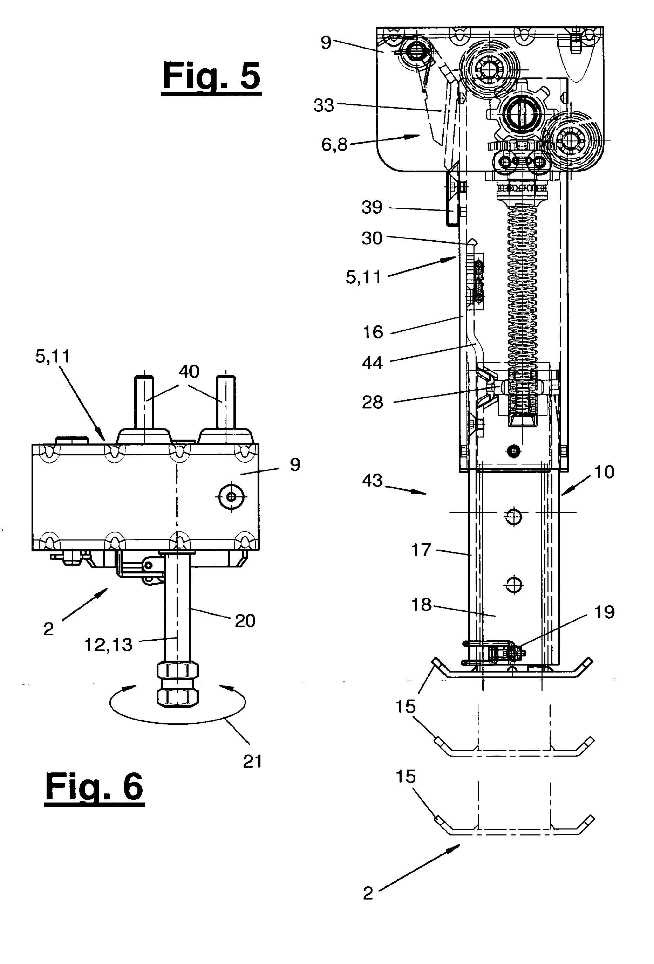

Die Endlagensicherung (7) bzw. die Verriegelung (29) besitzt ein am Stützfuß (10) verstellbar angeordnetes Sicherungselement (30), welches in dessen Axialrichtung beweglich ist und mit dem besagten Trägerteil oder dem Anschlag (33) zusammenwirkt. Das Sicherungselement (30) ist bevorzugt im hohlen Innenraum des Stützfußes (10) angeordnet und geführt, wobei es mit der Hubeinrichtung (5) oder einem ausfahrbaren Säulenteil, insbesondere dem Innenteil (17) verbunden ist. Wie Figur 2 und 5 verdeutlichen, ist das Sicherungselement (30) über einen Ausleger (44) mit axialer Distanz am Innenrohr (17) oder am Abtriebselement (28) bzw. der Spindelmutter angeordnet. In der Arbeitsstellung (43) befindet sich das Sicherungselement (30) verborgen im Außenrohr (16) und kann an dessen Innenseite axial geführt sein. In der Ruhestellung (42) ragt es gemäß Figur 3 und 7 axial aus der oberen Rohrmündung. Diese ist mit einer Abdeckung (48) bis auf eine kleine Durchtrittsöffnung für das Sicherungselement (30) verschlossen.

Das Sicherungselement (30) kann als Raste, vorzugsweise als Federraste, ausgebildet sein. Es weist hierfür z.B. eine gebogene Rastnase (31) auf, die das freie Ende des Anschlags (33) formschlüssig umgreift und eine schräge oder gebogene Außenfläche aufweist, die ein Angleiten am vorzugsweise drehbeweglichen und federnd ausweichfähigen Anschlag (33) mit anschließendem Einschnappen ermöglicht. Die Rastnase (31) kann am oberen Ende eines dünnen plattenförmigen Tragteils angeordnet sein.

Dem Sicherungselement (30) kann eine gefederte Dichtung (32) zugeordnet sein, die in der Ruhestellung (42) den freien Teil der Durchtrittsöffnung verschließt und gegen Umgebungseinflüsse abdichtet. Die Dichtung (32) ist ebenfalls auf dem Ausleger (44) oder dem Tragteil und unterhalb der Rastnase (31) angeordnet. Beim Ausfahren des Auslegers (44) tritt zunächst die Rastnase (31) durch die entsprechend große Durchtrittsöffnung, wobei anschließend die Dichtung (32) gegen den Öffnungsrand und die Abdeckung (48) bewegt und federnd angedrückt wird. Sie verschließt dabei die vom Tragteil frei gelassene Restöffnung.

Die nachgiebige Lageneinstellung (8) richtet den Stützfuß (10) in der Arbeitsstellung (43) aus. Sie weist hierfür den vorerwähnten beweglich am Träger (9) gelagerten und federbelasteten Anschlag (33) auf. Der Anschlag (33) bietet mehrere Anschlagstellen (37,38) für den Stützfuß (10). Figur 4 und 5 verdeutlichen diese Anordnung. Vorzugsweise sind zwei Anschlagsstellen (37,38) vorhanden, die in Arbeitsstellung (43) beidseits der Schwenkachse (12) und in Axialrichtung des Stützfußes (10) übereinander distanziert angeordnet sind. Der Anschlag (33) ist um eine horizontale Achse (34) schwenkbar am Träger (9) gelagert, wobei die Achse (34) parallel und oberhalb zu den Achsen (12,13) angeordnet und ausgerichtet ist. Der Anschlag (33) weist ferner eine gegen den Stützfuß (10) wirkende Feder (35) auf, die z.B. als ein- oder mehrteilige Torsionsfeder und insbesondere als Schenkelfeder ausgebildet ist, die auf der Achse (34) angeordnet ist und den Anschlag (33) gegen den Stützfuß (10) drückt.

Der Anschlag (33) besitzt eine gebogene und mit einer Rippe versteifte Anschlagplatte (36), die am oberen Ende mit der Achse (34) verbunden ist. Die Anschlagstellen (37,38) werden einerseits vom unteren Plattenende und andererseits von der Knick- oder Biegestelle der Anschlagplatte (36) gebildet.

Der Anschlag (33) wirkt einerseits mit dem Mantel und der oberen Stirnseite des äußeren Säulenteils (16) zusammen und liegt hier an. Die entsprechend große Anschlagplatte (36) kann dabei die obere Rohrmündung in der Ruhestellung (42) weitgehend abschirmen. Andererseits ist am Stützfuß (10) bzw. am äußeren Säulenteil (16) ein Mitnehmer (39) außenseitig angeordnet, der an der Oberseite eine schräge Anlagefläche aufweist und mit dem unteren Plattenende bzw. der hiervon gebildeten Anschlagstelle (37) zusammenwirkt.

Wie Figur 3 und 4 verdeutlichen, liegen in der vertikalen Arbeitsstellung (43) des Stützfußes (10) beide Anschlagstellen (37,38) mit vertikalem und seitlichem Abstand übereinander und nebeneinander. Bei der Abwärtsbewegung bzw. Schwenkbewegung des Stützfußes (10) aus der in Figur 3 und 7 gezeigten Ruhestellung (42) drückt die Stirnseite des äußeren Säulenteils (18) nach Lösen und Rückzug des Sicherungselements (30) gegen das nun freigegebene untere Plattenende (37) und schwenkt durch den Versatz der Achsen (12,13,34) den Anschlag (33) im Uhrzeigersinn weg, wobei die Feder (35) gespannt wird. In der weiteren Schwenkbewegung legt sich der untere Teil der abgewinkelten Anschlagplatte (36) gegen den Rohrmantel, wobei in der Nähe der Arbeitsstellung (43) der Mitnehmer (39) auf das untere Plattenende (37) trifft.

Falls der Stützfuß (10) über die Arbeitsstellung (43) hinausschwingt, wird der Anschlag (33) mitgenommen, wobei ggf. nur an der unteren Anschlagstelle (37) und am Mitnehmer (39) ein Berührungskontakt besteht. Die in ihrer Kraft entsprechend ausgelegte Feder (35) drückt den Anschlag (33) wieder zurück zur Soll-Stellung, in der an beiden Anschlagstellen (37,38) ein Berührungskontakt zwischen dem Anschlag (33) und dem Stützfuß (10) beidseits der Achse (12) besteht. Andererseits bewirkt ein Zurückschwingen bzw. Überschwingen in Gegenrichtung über die Soll-Stellung hinaus eine Anlage nur der oberen Kontaktstelle (38) am Rohrmantel und eine federnde Rückstellung. Die Rückstellkräfte des federnden Anschlags (33) werden außerhalb der Soll-Stellung jeweils oberhalb oder unterhalb der Schwenkachse (12) einseitig eingeleitet und bewirken eine entsprechende Rückdrehung. Der Stützfuß (10) kann sich hierdurch am Anschlag (33) in der Arbeitsstellung (43) einpendeln. In der Arbeits- und Soll-Stellung bewirken die Federkräfte über die nun beidseits der Achse (12) anliegenden Kontaktstellen (37,38) eine gegenseitige Aufhebung der eingeleiteten Momente und eine Lagestabilisierung des Stützfußes (10).

Der federnde Anschlag (33) erlaubt andererseits ein beidseitiges Wegschwenken des Stützfußes (10) bei einem evtl. Anfahren des Fahrzeugs (1). In Abwandlung der gezeigten Ausführungsform kann der Anschlag (33) zur Bildung der distanzierten Anschlagstellen (37,38) auch in anderer Weise ausgebildet sein.

Wird ausgehend von der Ruhestellung (42) gemäß Figur 3 und 7 der Hubantrieb (5) betätigt, blockiert zunächst die Endlagensicherung (7) die Schwenkbewegung des Stützfußes (10) um die Drehachse (12). Das untere Plattenende (37) ist in Ruhestellung (42) zwischen dem vorderen hoch gebogenen Ende der Rastnase (31) und dem Stirnrand des Außenrohrs (16) eingespannt. Durch die Antriebsbewegung fährt der Stützfuß (10) und insbesondere das innere Säulenteil (17) in Axialrichtung aus, wobei das Sicherungselement (30) mitgenommen wird und aus dem Eingriff mit dem Anschlag (33) schnappt. Auch die Dichtung (32) wird mitgenommen.

Die weitere Drehbewegung der Welle (20) bewirkt über die Stelleinrichtung (11) in Verbindung mit dem Eigengewicht und Moment des am oberen Ende um die Achse (12) frei drehbar gelagerten Stützfußes (10) eine schnelle und im Wesentlichen ungehinderte Abwärtsbewegung des Stützfußes (10). Hierbei kann je nach Getriebeauslegung ggf. auch eine kleine axiale Längenverstellung und Ausfahrbewegung stattfinden, die ggf. in Einzugrichtung erfolgt.

Im Bereich der Arbeitsstellung (43) sorgt die Lageneinstellung (8) für die Einnahme der vertikalen Fußstellung und verhindert durch die Anschlagfunktion und die beidseits der Schwenkachse (12) angepressten Andruckstellen (37,38) im Normalfall eine weitere Drehbewegung des Stützfußes (10). Die Lagenänderung des Stützfußes (10) ist dadurch beendet, wobei die weitere Antriebsbewegung in der Längenverstellung und eine Ausfahrbewegung des Stützfußes (10) umgesetzt wird. Die Feder (35) ist hierfür entsprechend ausgelegt, um die Drehbewegung des Ritzels (24) in eine Spindelrotation umzusetzen. Die Eingriffstelle zwischen Ritzel (24) und Abtriebsrad (25) des Zahnradgetriebes liegt ebenfalls zwischen den Anschlagstellen (37,38). Nach Bodenkontakt kann der in der Arbeitsstellung (43) gehaltene Stützfuß (10) noch soweit wie gewünscht zur Aufnahme des Federwegs der Achsfederung ausgefahren werden. Dieser Ausfahrweg kann frei wählbar sein. Er kann auch vorgegeben und in der Steuerung eines motorischen Antriebs (21) in Verbindung mit einer entsprechenden Sensorik zur Ermittlung des Bodenkontakts, z.B. durch Messung der Motorströme, hinterlegt sein.

Zum Lösen der Hubstütze (2) wird vom Hubantrieb (5) der Stützfuß (10) eingefahren und in der Länge verkürzt, wobei die Lageneinstellung (8) den Stützfuß (10) zunächst in der vertikalen Ausrichtung der Arbeitsstellung (43) hält. Sobald der Stützfuß (10) seine Minimallänge erreicht hat und durch gegenseitigen Anschlag der Säulenteile (16,17,18) blockiert, wird die weitere Antriebsbewegung durch die nunmehr drehfest fixierte Gewindespindel (27) und das Abtriebsrad (25) in eine Schwenkbewegung des Stützfußes (10) um die Achse (12) umgesetzt, bis die Ruhestellung (42) erreicht wird. Durch die Einfahrbewegung des Stützfußes (10) wurde zuvor das Sicherungselement (30) ausgefahren, welches bei Erreichen der Ruhestellung (42) am federnden Anschlag (33) angleitet und hinter diesen schnappt. Die Dichtung (32) wurde mitbewegt, wobei durch die Spindelhemmung beide in Ausfahrstellung fixiert sind.

In der gezeigten Ausführungsform erfolgt die Schwenkung des Stützfußes (10) durch ein Festhalten oder langsameres Drehen des Abtriebsrades (25) im Eingriff mit dem Ritzel (24). In Abwandlung der gezeigten Ausführungsform kann eine zusätzliche Mitnahmeeinrichtung mit einem Lenkergetriebe oder dgl. vorhanden sein, welche durch eine entsprechende Lenkergeometrie und Anschlagfunktion die Lagenänderung und insbesondere die Schwenkbewegung des Stützfußes (10) unterstützt. In diesem Fall kommen die Säulenteile (16,17,18) ggf. nicht in gegenseitigen Anschlag und in Blockierstellung beim Hochschwenken des Stützfußes (10).

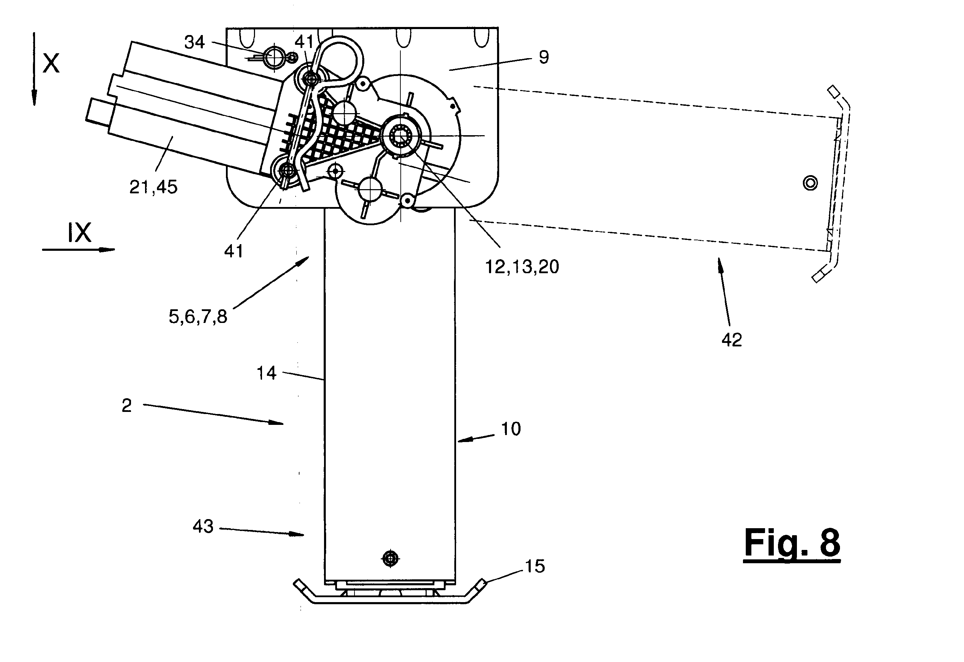

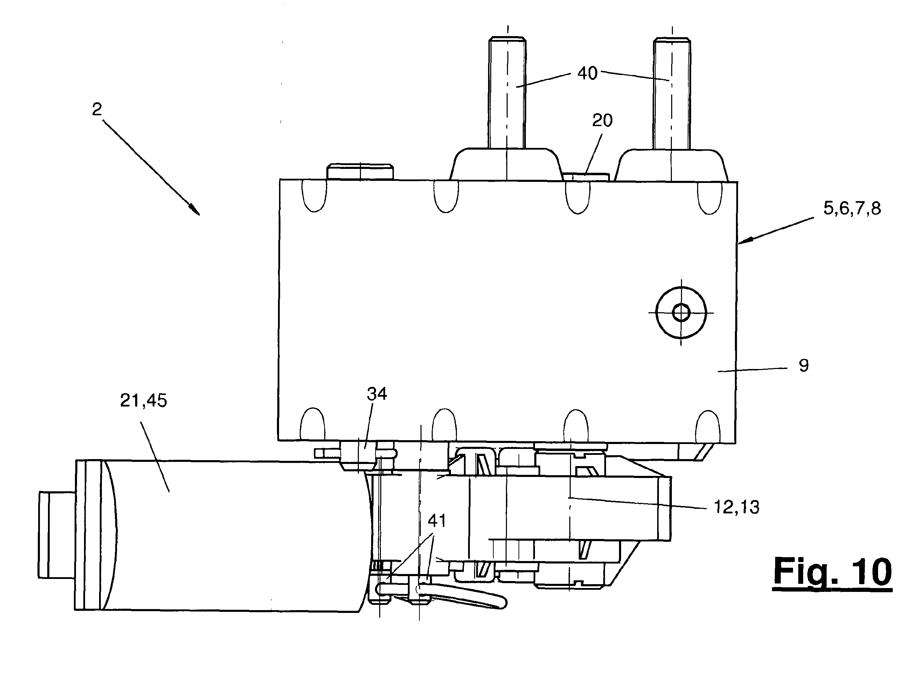

Figur 2 bis 7 zeigen eine Hubstütze (2) in der Ausbildung für einen manuellen Antrieb (21) mit einer Handkurbel oder dgl.. In Figur 8 bis 10 ist eine Variante mit einem motorischen Antrieb (21) dargestellt, der ggf. nachgerüstet und auf das Treibteil (20) gesteckt werden kann. Der innere Aufbau der Hubstütze (2) mit der Hubeinrichtung (5) und der Positioniereinrichtung (6) kann der gleiche wie im ersten Ausführungsbeispiel sein.

Der motorische Antrieb (21) kann z.B. einen steuerbaren Motor (45), z.B. einen Elektromotor mit Niederspannung von z.B. 24 Volt aufweisen, dem ggf. ein Untersetzungsgetriebe vorgeschaltet ist. Der Motor (45) und das Getriebe können seitlich an die Hubstütze (2) in definierter Lage angebaut und ggf. nachgerüstet werden. Hierfür können z.B. am Träger (9) zwei oder mehr Lagerstifte (41) seitlich abstehen, auf die die Antriebseinheit mit entsprechenden Bohrungen aufgesteckt und mit einem Splint oder dgl. in Anbaulage gemäß Figur 8 und 9 gesichert wird. Die Verbindung kann bei Bedarf wieder gelöst werden. Alternativ kann ein motorischer Antrieb (21) auf andere Weise mit der Hubstütze (2) fest oder lösbar verbunden werden.

Die motorischen Antriebe (21) verschiedener Hubstützen (2) am Fahrzeug (1) können eine gemeinsame Steuerung aufweisen, die z.B. in die Bedieneinrichtung (47) integriert oder alternativ bei getrennter Anordnung mit dieser in geeigneter Weise signaltechnisch verbunden ist. In weiterer Abwandlung können die motorischen Antriebe (21) eigenständige Steuerungen besitzen, die miteinander kommunizieren, was z.B. per Kabelverbindung oder drahtlos per Funk, Infrarot oder dgl. möglich ist.

Ferner kann die Bedieneinrichtung (47) eine Nivelliereinrichtung aufweisen oder mit dieser verbunden sein. Die Nivelliereinrichtung (nicht dargestellt) ermöglicht ein Ausrichten des Fahrzeugs (1) und dessen Fahrgestells (3) in einer gewünschten Lage, insbesondere in Horizontallage. Hierfür sind ein oder mehrere Neigungssensoren zur Neigungsermittlung relevanter Fahrzeugteile, z.B. des Bodens eines Fahrzeugaufbaus, vorhanden. Über die Nivelliereinrichtung werden die mehreren Hubstützen (2) und deren motorische Antriebe (21) derart angesteuert, dass einerseits die gewünschte Höhenlage des relevanten Fahrzeugteils gegenüber dem Untergrund und andererseits dessen gewünschte Neigung eingenommen wird. Alternativ kann auch nur auf die Neigungslage ohne Rücksicht auf die Höhenlage nivelliert werden. Die Nivelliereinrichtung kann ebenfalls mit dem Bediengerät (47) und insbesondere einer evtl. Fernbedienung kombiniert werden.

Die Hubstütze (2) kann in gleicher gezeigter Ausführung wahlweise links und rechts an einem Fahrgestell (3) angebaut werden, wobei sie in verschiedene Richtungen schwenkt. Alternativ sind seitenverkehrte Ausführungen mit einer Anordnung des Anschlags (33) und des Sicherungselements (30) rechts von den Achsen (12,13) möglich, die bei Anbau link/rechts gleichgerichtet schwenken.

Abwandlungen der gezeigten und beschriebenen Ausführungsformen sind in verschiedener Weise möglich. Ein motorischer Antrieb (21) kann statt des gezeigten klassischen elektrischen Motors einen hydraulischen oder pneumatischen Motor oder ein beliebiges anderes drehendes oder lineares Antriebsmittel aufweisen. Ferner können zwei oder mehr Hubstützen (2) der gezeigten Einzelantriebe einen gemeinsamen manuellen oder motorischen Antrieb aufweisen, wobei z.B. die Treibteile (20) miteinander und mit dem gemeinsamen Antrieb (21) verbunden sind.

Ferner können die Komponenten der Hubstütze (2) konstruktiv in anderer Weise ausgebildet sein. Dies betrifft zum einen den längenverstellbaren Stützfuß (10) und zum anderen den Hubantrieb (5). Die Stelleinrichtung (11) kann konstruktiv anders ausgebildet und an anderer Stelle angeordnet sein. Sie kann sich auch außerhalb des Stützfußes (10) befinden. Für die Lagenänderung und die Längenverstellung des Stützfußes (10) können getrennte Stelleinrichtungen und ggf. getrennte Antriebsmittel vorhanden sein. Ferner kann die Ausbildung des Getriebes (22) zur Umsetzung der Antriebsbewegung in eine kombinierte Lagenänderung und Längenverstellung bei den gezeigten Ausführungsbeispielen variieren. Auch die Kinematik für die Lagenänderung des Stützfußes (10) und die entsprechende Anordnung und Ausrichtung der zugehörigen Bewegungsachsen kann variieren.

Die Merkmale der Ausführungsbeispiele können miteinander in beliebiger Weise kombiniert und/oder vertauscht werden. Bedeutsam für die Erfindung sind auch die folgenden Merkmale und zwar sowohl einzeln, als auch in Kombination miteinander.

Die Endlagensicherung (7) und die Lageneinstellung (8) der Positioniereinrichtung (6) sind miteinander kombiniert. Die Hubeinrichtung (5) ist derart ausgebildet, dass die Längenverstellung und die Lagenveränderung des Stützfußes (10) zumindest bereichsweise voneinander getrennt sind. Die Hubeinrichtung (5) ist ferner derart ausgebildet, dass der Stützfuß (10) in der gehaltenen Arbeitsstellung längenverstellbar ist. Die Hubeinrichtung (5) und die Positioniereinrichtung (6) wirken zur Trennung von Längenverstellung und Lagenveränderung des Stützfußes (10) zusammen.

Die Endlagensicherung (7) weist ein am Stützfuß (10) verstellbar angeordnetes Sicherungselement (30) auf, das eine gebogene Rastnase (31) besitzt. Dem Sicherungselement (30) ist eine Dichtung (32) zugeordnet, wobei beide gemeinsam beweglich sind.

Die Lageneinstellung (8) weist einen beweglich am Träger (9) gelagerten und federbelasteten Anschlag (33) mit mehreren, insbesondere zwei Anschlagstellen (37,38) auf, die in Arbeitsstellung beidseits der Schwenkachse (12) und in Längsrichtung des Stützfußes (10) distanziert angeordnet sind. Der Anschlag (33) ist schwenkbar am Träger (9) gelagert ist und weist eine gegen den Stützfuß (10) wirkende Feder (35) auf. Der Anschlag (33) besitzt eine gebogene Anschlagplatte (36). Die Anschlagstellen (37,38) sind am Ende der Anschlagplatte (36) und an einer Biege- oder Knickstelle des Anschlags (33) angeordnet sind.

Der Stützfuß (10) weist außenseitig einen mit dem Plattenende (37) zusammenwirkenden Mitnehmer (39) auf. Der Stützfuß (10) hat eine teleskopierbare, mehrteilige Stützsäule (14) und ein Fußteil (15). Die Stützsäule (14) weist mehrere aneinander längsbeweglich angeordnete rohrartige Säulenteile (16,17,18) auf. Ein äußeres Säulenteil (16) der Stützsäule (14) ist schwenkbar am Träger (9) gelagert. Ein Mitnehmer (39) ist am äußeren Säulenteil (16) mit axialem Abstand zur Schwenkachse (12) angeordnet. Ein am Stützfuß (10) verstellbar angeordnetes Sicherungselement (30) ist im äußeren Säulenteil (16) axial geführt, wobei es in der Ruhestellung aus dessen oberem Ende ragt. An der oberen Rohrmündung des äußeren Säulenteils (16) ist eine Abdeckung (48) mit einer Durchtrittsöffnung für das das Sicherungselement (30) angeordnet. Eine dem Sicherungselement (30) zugeordnete Dichtung (32) verschließt in der Ruhestellung (42) den freien Rest der Durchtrittsöffnung. Ein inneres Säulenteil (17) ist im äußeren Säulenteil (16) geführt. Ein endseitiges Säulenteil (18) ist im inneren Säulenteil (17) angeordnet und mit einer Absteckung (19) in verschiedenen Auszuglängen einstellbar.

Die Hubeinrichtung (5) ist mit Säulenteilen (16,17) des als längenverstellbare Stützsäule (14) ausgebildeten und beweglich an einem Träger (9) gelagerten Stützfußes (10) verbunden. Die Stelleinrichtung (11) ist in einem hohlen Stützfuß (10) angeordnet. Die Stelleinrichtung (11) weist ein Getriebe (22) mit einem nach außen geführten Treibteil (20), insbesondere einer Welle, für die Verbindung mit einem manuellen oder einem motorischen Antrieb (21) auf. Das Getriebe (22) weist ein Umlenkgetriebe (23), insbesondere eine Kegelradgetriebe, mit einem auf dem Treibteil (20) sowie der Schwenk- und Antriebsachse (12,13) angeordneten Antriebselement (24), insbesondere einem Ritzel, auf. Das Getriebe (22) weist einen Lineartrieb (26), insbesondere einen Spindeltrieb, im Stützfuß (10) auf. Der Spindeltrieb (26) hat eine im Säulenteil (16) gelagerte Gewindespindel (27) und eine mit einem inneren Säulenteil (17) verbundene Spindelmutter (28). Die Gewindespindel (27) ist mit einem Abtriebselement (25), insbesondere einem Abtriebsrad, des Umlenkgetriebes (23) verbunden. Ein am Stützfuß (10) verstellbares Sicherungselement (30) ist mit einem Ausleger (44) an einem inneren Säulenteil (17) oder an der Spindelmutter (28) angeordnet ist.

Eine motorisierte Hubstütze (2) weist eine Energieversorgung (46) und eine Bedieneinrichtung (47), insbesondere eine Fernbedienung mit Sicherungseinrichtung, auf. Ein Fahrzeug (1) weist zumindest zwei beidseits und insbesondere im Heckbereich angeordnete Hubstützen (2) auf. Mehrere motorisierte Hubstützen (2) haben eine gemeinsame Energieversorgung (46) und eine Bedieneinrichtung (47).

### BEZUGSZEICHENLISTE

- 1: Fahrzeug, Anhänger
- 2: Hubstütze
- 3: Fahrgestell, Chassis
- 4: Längsträger
- 5: Hubeinrichtung
- 6: Positioniereinrichtung
- 7: Endlagensicherung
- 8: Lageneinstellung
- 9: Träger
- 10: Stützfuß
- 11: Stelleinrichtung
- 12: Achse, Lager, Schwenkachse
- 13: Achse, Antriebsachse
- 14: Stützsäule
- 15: Fußteil, Fußplatte
- 16: Säulenteil, Außenteil, Außenrohr
- 17: Säulenteil, Innenteil, Innenrohr
- 18: Säulenteil, Endteil, Endrohr
- 19: Absteckung
- 20: Treibteil, Welle
- 21: Antrieb manuell oder motorisch
- 22: Getriebe
- 23: Umlenkgetriebe, Kegelradgetriebe
- 24: Antriebselement, Ritzel
- 25: Abtriebselement, Abtriebsrad
- 26: Lineartrieb, Spindeltrieb
- 27: Gewindespindel
- 28: Spindelmutter
- 29: Verriegelung
- 30: Sicherungselement, Federraste
- 31: Rastnase
- 32: Dichtung federbelastet
- 33: Anschlag
- 34: Achse
- 35: Feder
- 36: Anschlagplatte
- 37: Anschlagstelle, Anschlagende
- 38: Anschlagstelle, Knickstelle
- 39: Mitnehmer
- 40: Bolzen
- 41: Lagerstift
- 42: Endlage, Ruhestellung
- 43: Endlage, Arbeitsstellung
- 44: Ausleger
- 45: Motor
- 46: Energieversorgung
- 47: Bedieneinrichtung
- 48: Abdeckung

## Patentansprüche

1. Hubstütze für Fahrzeuge (1), bestehend aus einem längenverstellbaren und schwenkbar an einem Träger (9) gelagerten Stützfuß (10) und einer Hubeinrichtung (5) zur Längenverstellung und zur Lagenveränderung des Stützfußes (10), wobei die Schwenkachse (12) des Stützfußes (10) mit der Antriebsachse (13) der Hubeinrichtung (5) zusammenfällt und wobei die Hubstütze (2) eine Positioniereinrichtung (6) für mindestens eine Endlage (42,43) des Stützfußes (10) aufweist, **dadurch gekennzeichnet, dass** der Stützfuß (10) frei schwenkbar am Träger (9) gelagert ist. .

2. Hubstütze nach Anspruch 1, **dadurch gekennzeichnet, dass** die Hubstütze (2) eine Positioniereinrichtung (6) für zwei Endlagen (42,43) des Stützfußes (10) aufweist.

3. Hubstütze nach Anspruch 1 oder 2, **dadurch gekennzeichnet, dass** die Positioniereinrichtung (6) eine Endlagensicherung (7) für die Endlage (42) in Ruhestellung und/oder eine Lageneinstellung (8) für die Endlage (43) in Arbeitsstellung aufweist.

4. Hubstütze nach Anspruch 1, 2 oder 3, **dadurch gekennzeichnet, dass** die Endlagensicherung (7) und/oder die Lageneinstellung (8) nachgiebig oder ausweichfähig ausgebildet sind.

5. Hubstütze nach einem der vorhergehenden Ansprüche, **dadurch gekennzeichnet, dass** die Hubeinrichtung (5) eine Stelleinrichtung (11) zur Längenverstellung und zur Lagenveränderung des Stützfußes (10) mit einem einzigen manuellen oder motorischen Antrieb (21) aufweist.

6. Hubstütze nach einem der Ansprüche 2 bis 5, **dadurch gekennzeichnet, dass** die Endlagensicherung (7) und die Lageneinstellung (8) miteinander kombiniert sind und gemeinsame Bauteile, insbesondere einen federnden Anschlag (33), aufweisen.
(5. 10, *Z.2-5*)

7. Hubstütze noch einem der vorhergehenden Ansprüche, **dadurch gekennzeichnet, dass** die Endlagensicherung (7) in Abhängigkeit von der Längenverstellung des Stützfußes (10) betätigbar ist.

8. Hubstütze nach einem der vorhergehenden Ansprüche, **dadurch gekennzeichnet, dass** die Endlagensicherung (7) eine formschlüssige Verriegelung (29) zwischen Stützfuß (10) und Träger (9) zur Arretierung des Stützfußes (10) in der Ruhestellung aufweist und/oder ein am Stützfuß (10) verstellbar angeordnetes Sicherungselement (30) aufweist, das mit einem Anschlag (33) am Träger (9) zusammen wirkt.

9. Hubstütze nach einem der vorhergehenden Ansprüche, **dadurch gekennzeichnet, dass** ein Sicherungselement (30) im Stützfuß (10) angeordnet und geführt und als Raste, insbesondere als Federraste, ausgebildet ist, wobei das Sicherungselement (30) mit einem längenverstellbaren Teil des Stützfußes (10) und/oder der Hubeinrichtung (5) verbunden ist.

10. Hubstütze nach einem der vorhergehenden Ansprüche, **dadurch gekennzeichnet, dass** die Lageneinstellung (8) nachgiebig ausgebildet ist und den Stützfuß (10) in der Arbeitsstellung ausrichtet, wobei die Lageneinstellung (8) einen beweglich am Träger (9) gelagerten und federbelasteten Anschlag (33) aufweist, der mehrere, insbesondere zwei Anschlagstellen (37,38) für den Stützfuß (10) besitzt.

11. Hubstütze nach einem der vorhergehenden Ansprüche, **dadurch gekennzeichnet, dass** die Hubeinrichtung (5) den Stützfuß (10) in seiner eingefahrenen Stellung und einem hierbei blockierten Spindeltrieb (26) in die Endlage (42) der Ruhestellung bewegt.

12. Hubstütze nach einem der vorhergehenden Ansprüche, **dadurch gekennzeichnet, dass** die Hubeinrichtung (5) bei Einnahme der Endlage (42) der Ruhestellung die Endlagensicherung (7) betätigt.

13. Hubstütze nach einem der vorhergehenden Ansprüche, **dadurch gekennzeichnet, dass** die Hubeinrichtung (5) in der Ruhestellung des Stützfußes (10) beim Ausfahren der Säulenteile (16,17,18) die Endlagensicherung (7) löst.

14. Fahrzeug, insbesondere Wohnmobil, Verkaufsfahrzeug oder dgl., mit mindestens einer Hubstütze (2) nach Anspruch 1.

15. Fahrzeug nach Anspruch 14, **dadurch gekennzeichnet, dass** die Hubstütze (2) nach mindestens einem der Ansprüche 2 bis 13 ausgebildet ist.

## Claims

1. Lifting support for vehicles (1), comprising a length-adjustable support leg (10) pivotably mounted on a carrier (9), and a lifting device (5) for adjusting the length and for changing the position of the support leg (10), wherein the pivot axis (12) of the support leg (10) coincides with the drive axis (13) of the lifting device (5), and wherein the lifting support (2) has a positioning device (6) for at least one end position (42, 43) of the support leg (10), **characterized in that** the support leg (10) is mounted in a freely pivotable manner on the carrier (9).

2. Lifting support according to Claim 1, **characterized in that** the lifting support (2) has a positioning device (6) for two end positions (42, 43) of the support leg (10).

3. Lifting support according to Claim 1 or 2, **characterized in that** the positioning device (6) has an end-position safeguard (7) for the end position (42) in the inoperative state and/or a position adjuster (8) for the end position (43) in the operative state.

4. Lifting support according to Claim 1, 2 or 3, **characterized in that** the end-position safeguard (7) and/or the position adjuster (8) is/are designed to be compliant or capable of yielding.

5. Lifting support according to one of the preceding claims, **characterized in that** the lifting device (5) has an actuating device (11) for adjusting the length and for changing the position of the support leg (10) with a single manual or motor drive (21).

6. Lifting support according to one of Claims 2 to 5, **characterized in that** the end-position safeguard (7) and the position adjuster (8) are combined with one another and have common components, in particular a resilient stop (33).

7. Lifting support according to one of the preceding claims, **characterized in that** the end-position safeguard (7) can be actuated as a function of the length adjustment of the support leg (10).

8. Lifting support according to one of the preceding claims, **characterized in that** the end-position safeguard (7) has a positive locking mechanism (29) between support leg (10) and carrier (9) for immobilizing the support leg (10) in the inoperative state and/or has a securing element (30) which is arranged adjustably on the support leg (10) and which interacts with a stop (33) on the carrier (9).

9. Lifting support according to one of the preceding claims, **characterized in that** a securing element (30) is arranged and guided in the support leg (10) and is designed as a latch, in particular a spring latch, wherein the securing element (30) is connected to a length-adjustable part of the support leg (10) and/or of the lifting device (5).

10. Lifting support according to one of the preceding claims, **characterized in that** the position adjuster (8) is designed to be flexible and aligns the support leg (10) in the operative state, wherein the position adjuster (8) has a springloaded stop (33) which is movably mounted on the carrier (9) and which has a plurality of, in particular two, stop points (37, 38) for the support leg (10).

11. Lifting support according to one of the preceding claims, **characterized in that** the lifting device (5) moves the support leg (10) in its retracted state and a spindle drive (26) blocked here into the end position (42) of the inoperative state.

12. Lifting support according to one of the preceding claims, **characterized in that**, upon assuming the end position (42) of the inoperative state, the lifting device (5) actuates the end-position safeguard (7).

13. Lifting support according to one of the preceding claims, **characterized in that**, in the inoperative state of the support leg (10), the lifting device (5) releases the end-position safeguard (7) when extending the pillar parts (16, 17, 18).

14. Vehicle, in particular a motorhome, sales vehicle or the like, having at least one lifting support (2) according to Claim 1.

15. Vehicle according to Claim 14, **characterized in that** the lifting support (2) is designed according to at least one of Claims 2 to 13.

## Revendications

1. Appui de levage pour véhicules (1), constitué d'un pied d'appui (10) réglable en longueur et monté de manière pivotante sur un support (9) et d'un dispositif de levage (5) pour le réglage en longueur et la variation de position du pied d'appui (10), l'axe de pivotement (12) du pied d'appui (10) coïncidant avec l'axe d'entraînement (13) du dispositif de levage (5) et l'appui de levage (2) présentant un dispositif de positionnement (6) pour au moins une position d'extrémité (42, 43) du pied d'appui (10), **caractérisé en ce que** le pied d'appui (10) est monté de manière librement pivotante sur le support (9).

2. Appui de levage selon la revendication 1, **caractérisé en ce que** l'appui de levage (2) présente un dispositif de positionnement (6) pour deux positions d'extrémité (42, 43) du pied d'appui (10).

3. Appui de levage selon la revendication 1 ou 2, **caractérisé en ce que** le dispositif de positionnement (6) présente une fixation (7) de position d'extrémité pour la position d'extrémité (42) dans la position de repos et/ou un ajustement de position (8) pour la position d'extrémité (43) dans la position de travail.

4. Appui de levage selon la revendication 1, 2 ou 3, **caractérisé en ce que** la fixation (7) de position d'extrémité et/ou l'ajustement de position (8) sont réalisés de manière flexible ou écartable.

5. Appui de levage selon l'une quelconque des revendications précédentes, **caractérisé en ce que** le dispositif de levage (5) présente un dispositif de réglage (11) pour le réglage en longueur et pour la variation de position du pied d'appui (10) avec un entraînement unique manuel ou à moteur (21).

6. Appui de levage selon l'une quelconque des revendications 2 à 5, **caractérisé en ce que** la fixation (7) de position d'extrémité et l'ajustement de position (8) sont combinés ensemble et présentent des composants communs, en particulier une butée à ressort (33).
(voir page 10, lignes 2 à 5).

7. Appui de levage selon l'une quelconque des revendications précédentes, **caractérisé en ce que** la fixation (7) de position d'extrémité peut être actionnée en fonction du réglage en longueur du pied d'appui (10).

8. Appui de levage selon l'une quelconque des revendications précédentes, **caractérisé en ce que** la fixation (7) de position d'extrémité présente un verrouillage par engagement par correspondance géométrique (29) entre le pied d'appui (10) et le support (9) pour bloquer le pied d'appui (10) dans la position de repos et/ou présente un élément de fixation (30) disposé de manière réglable sur le pied d'appui (10), lequel élément de fixation coopère avec une butée (33) sur le support (9).

9. Appui de levage selon l'une quelconque des revendications précédentes, **caractérisé en ce qu'**un élément de fixation (30) est disposé et guidé dans le pied d'appui (10) et est réalisé sous forme de cliquet, notamment sous forme de cliquet à ressort, l'élément de fixation (30) étant connecté à une partie réglable en longueur du pied d'appui (10) et/ou du dispositif de levage (5).

10. Appui de levage selon l'une quelconque des revendications précédentes, **caractérisé en ce que** l'ajustement de position (8) est réalisé de manière flexible et oriente le pied d'appui (10) dans la position de travail, l'ajustement de position (8) présentant une butée (33) montée mobile sur le support (9) et sollicitée par ressort, qui possède plusieurs points de butée (37, 38), notamment deux, pour le pied d'appui (10).

11. Appui de levage selon l'une quelconque des revendications précédentes, **caractérisé en ce que** le dispositif de levage (5) déplace le pied d'appui (10) dans sa position rentrée et déplace un entraînement à broche (26) bloqué par celui-ci dans la position d'extrémité (42) de la position de repos.

12. Appui de levage selon l'une quelconque des revendications précédentes, **caractérisé en ce que** le dispositif de levage (5), lorsque la position de repos adopte la position d'extrémité (42), actionne la fixation (7) de position d'extrémité.

13. Appui de levage selon l'une quelconque des revendications précédentes, **caractérisé en ce que** le dispositif de levage (5), dans la position de repos du pied d'appui (10), lors du déploiement des parties de colonne (16, 17, 18), desserre la fixation (7) de position d'extrémité.

14. Véhicule, en particulier caravane, véhicule de vente ou similaire, comprenant au moins un appui de levage (2) selon la revendication 1.

15. Véhicule selon la revendication 14, **caractérisé en ce que** l'appui de levage (2) est réalisé selon au moins l'une quelconque des revendications 2 à 13.
